# FASCICULE DE BREVET EUROPEEN

(11) **EP 4 419 316 B1**
(45) Date de publication et mention de la délivrance du brevet: **04.03.2026**
(21) Numéro de dépôt: 22801520.2
(22) Date de dépôt: 14.10.2022
(51) Int. Cl.: B29C 70/86, B29D 99/00, B64C 11/00, B64C 11/24, F01D 5/00, F01D 5/14, F01D 5/28, F01D 25/00

(54) **PROCEDE DE FABRICATION D'UNE AUBE COMPRENANT UNE CAVITE RENFORCEE**
VERFAHREN ZUR HERSTELLUNG EINER SCHAUFEL MIT VERSTÄRKTEM HOHLRAUM
METHOD FOR MANUFACTURING A VANE COMPRISING A REINFORCED CAVITY

(30) Priorité: 20.10.2021 FR 2111144
(43) Date de publication de la demande: 28.08.2024
(73) Titulaire: SAFRAN, 75015 Paris (FR)
(72) Inventeur: LANFANT, Nicolas, Pierre, 77550 Moissy-Cramayel (FR); TRANQUART, Bastien, 77550 Moissy-Cramayel (FR)
(74) Mandataire: Cabinet Beau de Loménie
(86) Numéro de dépôt international: PCT/FR2022/051943
(87) Numéro de publication internationale: WO 2023/067270

(56) Documents cités:
- WO-A2-2015/017001
- FR-A1- 2 559 422

## Description

### Domaine Technique

La présente invention se rapporte au domaine général des aubes, hélices ou aubages en matériau composite ayant une cavité interne.

### Technique antérieure

Dans le domaine des moteurs aéronautiques, les aubes de turbomachines peuvent être réalisées en matériau composite afin d'acquérir une résistance équivalente ou supérieure au métal, mais une masse globale inférieure. En effet, l'amélioration des performances de la turbomachine, en particulier par rapport à la consommation, nécessite une diminution de masse.

Dans le cas des aubes en matériau composite obtenues par tissage tridimensionnel, le matériau composite situé au cœur de l'aube n'a qu'une influence réduite sur les performances mécaniques de la pièce, alors qu'il compte pour une part non négligeable de la masse de l'aube. Ainsi, il est intéressant de fabriquer des aubes creuses, comprenant une peau en matériau composite obtenue par tissage tridimensionnel. Un tel procédé de fabrication est par exemple décrit dans le document US2015040396A1.

Toutefois la présence d'une cavité à l'intérieur de l'aube peut être pénalisante, particulièrement dans le cas d'une aube longue et d'une cavité de taille importante. En effet, dans ce cas, les peaux fines en matériau composite de l'aube présentent des modes propres de vibration bas qui se rapprochent des modes propres du moteur en fonctionnement. Ainsi, les peaux fines en matériau composite peuvent se mettre à vibrer, voire à entrer en résonnance.

En outre, la présence d'une cavité de taille importante à l'intérieur de l'aube diminue la résistance à la torsion et aux efforts aérodynamiques.

Le document FR 2 559 422 A1 divulgue un procédé de fabrication d'un élément à profil de pale comprenant une enveloppe creuse lamifiée accueillant une structure support ondulée.

### Exposé de l'invention

La présente invention a pour but de proposer une solution qui permet de réaliser des aubes de turbomachine en matériau composite ayant une cavité interne renforcée, en remédiant aux inconvénients précités.

A cet effet, l'invention propose un procédé de fabrication d'une aube de turbomachine en matériau composite ayant une cavité, comprenant au moins :
- la réalisation d'un noyau ayant la forme de la cavité de l'aube à fabriquer, ledit noyau comprenant une structure de renfort occupant seulement une partie du volume du noyau, le noyau comprenant en outre une enveloppe étanche définissant la surface extérieure dudit noyau, et
- la formation d'une peau en matériau composite autour du noyau.

Ainsi, de manière similaire au premier procédé de fabrication présenté, la cavité de l'aube obtenue est renforcée par une structure de renfort, conférant à l'aube une meilleure résistance mécanique et diminuant les risques de vibration des peaux. En occupant un volume limité de la cavité de l'aube, la structure de renfort n'ajoute pas une masse trop importante à l'aube. L'utilisation d'une enveloppe définissant la surface extérieure du noyau peut permettre l'utilisation d'un noyau partiellement creux et léger, tout en évitant un risque de migration de la résine servant à former les peaux vers l'intérieur du noyau.

Selon une caractéristique particulière de l'invention, le volume restant du noyau comprend un matériau élastomère, de manière à obtenir une aube en matériau composite ayant une cavité occupée par le matériau élastomère et la structure de renfort.

Ainsi, il est possible d'obtenir une aube dont la cavité est renforcée par la structure de renfort et occupée par un matériau élastomère. La présence du matériau élastomère à l'intérieur de l'aube permet un amortissement des sollicitations mécaniques, tout en restant sensiblement plus léger que du matériau composite.

Selon une autre caractéristique particulière de l'invention, la structure de renfort présente au moins en partie une architecture en treillis.

Selon une autre caractéristique particulière de l'invention, la structure de renfort comprend au moins un élément de soutien joignant deux parois internes de l'enveloppe en regard l'une de l'autre.

Cet élément de soutien peut par exemple prendre la forme d'une coque, d'une plaque ou d'un corps plein. Sur l'aube finale, ces éléments de soutien peuvent permettre de soutenir simultanément les deux peaux formant l'intrados et l'extrados de l'aube, de sorte à augmenter la résistance mécanique de l'aube et à limiter les risques de vibration des peaux.

Selon une autre caractéristique particulière de l'invention, l'élément de soutien est positionné sur un ou plusieurs ventres des modes propres de vibration des parois de la cavité.

En plaçant un ou plusieurs éléments de soutien sur les ventres des modes propres de vibration, on peut renforcer efficacement la cavité de l'aube ou de l'aubage avec des éléments de soutien réduits et légers.

Selon une autre caractéristique particulière de l'invention, l'élément de soutien est un corps plein épousant la forme interne d'une partie de l'enveloppe.

Selon une autre caractéristique particulière de l'invention, l'enveloppe comprend des protubérances en saillie vers l'extérieur du noyau.

Ces protubérances en saillie assurent une meilleure liaison mécanique entre la structure de renfort et la peau en matériau composite de l'aube.

Selon une autre caractéristique particulière de l'invention, la peau en matériau composite est réalisée par l'injection d'une résine précurseur de matrice dans une préforme fibreuse recouvrant le noyau, le procédé comprenant en outre le traitement de ladite résine pour obtenir une peau comprenant un renfort fibreux densifié par ladite matrice.

Selon une autre caractéristique particulière de l'invention, la préforme fibreuse est réalisée par insertion du noyau dans une déliaison d'une ébauche fibreuse réalisée en une seule pièce par tissage tridimensionnel de fils.

Selon une autre caractéristique particulière de l'invention, la préforme fibreuse est obtenue par drapage de strates fibreuses autour du noyau.

Selon une autre caractéristique particulière de l'invention, la peau en matériau composite est réalisée par drapage de strates fibreuses pré-imprégnées d'une résine précurseur de matrice autour du noyau, le procédé comprenant en outre le traitement de ladite résine pour obtenir une peau comprenant un renfort fibreux densifié par ladite matrice.

### Brève description des dessins

[Fig. 1] La figure 1 est une vue schématique en trois dimensions d'une enveloppe et d'une structure de renfort en treillis conformément à l'invention.
[Fig. 2] La figure 2 est une vue schématique en trois dimensions d'un noyau conformément à l'invention comprenant l'enveloppe et la structure de renfort de la figure 1.
[Fig. 3] La figure 3 est une vue schématique en trois dimensions d'une enveloppe et d'une structure de renfort comprenant une coque conformément à l'invention.
[Fig. 4] La figure 4 est une vue schématique en trois dimensions d'un noyau conformément à l'invention comprenant l'enveloppe la structure de renfort de la figure 3.
[Fig. 5] La figure 5 est une vue schématique en trois dimensions d'une enveloppe et d'une structure de renfort comprenant une coque et un corps plein conformément à l'invention.
[Fig. 6] La figure 6 est une vue schématique en trois dimensions d'un noyau conformément à l'invention comprenant l'enveloppe et la structure de renfort de la figure 5.
[Fig. 7] La figure 7 est une vue schématique en trois dimensions d'une enveloppe et d'une structure de renfort comportant un treillis, une coque et un corps plein conformément à l'invention.
[Fig. 8] La figure 8 est une vue schématique en trois dimensions d'un noyau conformément à l'invention comprenant l'enveloppe et la structure de renfort de la figure 7.
[Fig. 9] La figure 9 est une vue schématique en plan d'une ébauche fibreuse tissée destinée à la réalisation d'une aube par injection RTM conformément à un mode de réalisation de l'invention.
[Fig. 10] La figure 10 est une vue en coupe de l'ébauche fibreuse de la figure 9.
[Fig. 11] La figure 11 est une vue schématique d'une préforme fibreuse réalisée par l'insertion d'un noyau selon l'invention dans l'ébauche fibreuse des figures 9 et 10.

### Description des modes de réalisation

L'invention s'applique d'une manière générale à différents types de pièces en matériaux composites comprenant une cavité interne. L'invention trouve une application avantageuse pour les aubages de turbomachines, et notamment pour les aubes fixes ou stator pour moteur aéronautique à turbine à gaz de type aube directrice de sortie ou « OGV » (pour « outlet guide vane »).

On réalise un noyau ayant la forme de la cavité interne de l'aube en matériau composite à réaliser, et comprenant une structure de renfort et une enveloppe étanche.

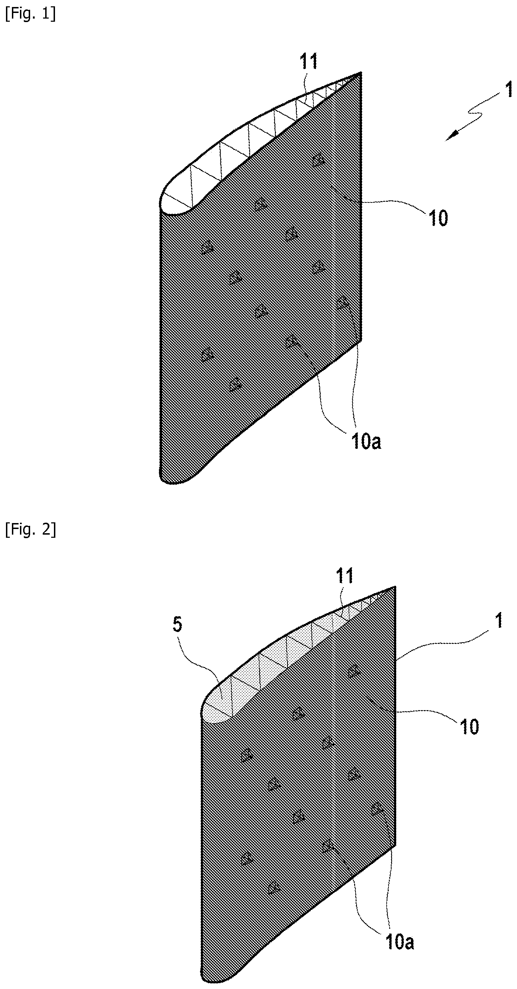

Comme illustré sur les figures 1 et 2, la structure de renfort peut prendre la forme d'un treillis et consister en un ensemble tridimensionnel de barres. La figure 1 illustre un noyau 1 comprenant une enveloppe 10 et une structure de renfort 11 présentant une forme de treillis. Le treillis 11 relie les parois internes de l'enveloppe 10 en de nombreux points.

Comme illustré sur la figure 2, une matière élastomère 5 peut être coulée ou injectée à l'intérieur de l'enveloppe 10 et entre les éléments de la structure de renfort 11. L'intégration d'une matière élastomère à l'intérieur de la structure de renfort permettra d'amortir certaines sollicitations lorsque le noyau sera présent à l'intérieur de l'aube en matériau composite à fabriquer. Ainsi, la matière élastomère 5 intégrée au noyau 1 n'est pas destinée à être retirée à la fin du procédé de fabrication de l'aube en matériau composite.

Dans l'exemple illustré sur les figures 1 et 2, les barres du treillis sont droites et de section constante. Les barres peuvent être de section non-constante ou courbées.

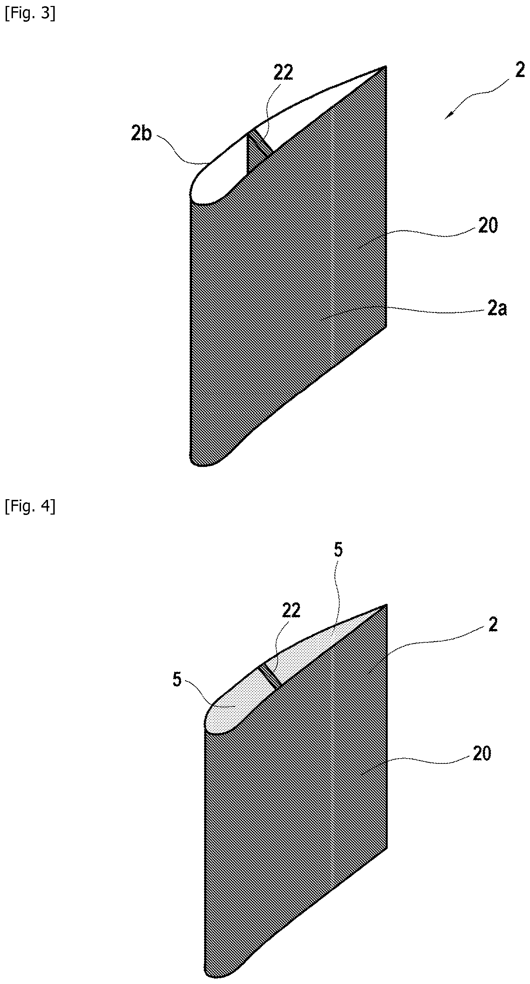

Comme illustré sur les figures 3 et 4, la structure de renfort peut comporter des parties en forme de coque 22. La figure 3 illustre un noyau 2 comprenant une enveloppe 20 et une structure de renfort 22.

Les parties en forme de coque peuvent être placées judicieusement de manière à soutenir ou renforcer des zones particulières de l'aube. Selon un mode particulier de réalisation de l'invention, une étude préalable des modes de vibration des peaux de l'aube peut être menée pour déterminer l'emplacement des ventres des modes de vibration. De préférence, on cherchera à déterminer les modes de flexion et de torsion simple. Ainsi, les parties en forme de coque seront de préférence placées orthogonalement aux endroits des peaux correspondant à des ventres.

Dans l'exemple illustré sur les figures 3 et 4, la partie en forme de coque 22 est positionnée perpendiculairement aux deux surfaces 2a et 2b du noyau 2 destinées à venir en contact des peaux de l'aubage, qui correspondront à l'intrados et à l'extrados de l'aube. Ainsi, la structure de renfort pourra soutenir et renforcer les deux peaux de l'aubage afin de limiter leurs vibrations.

Les parties en forme de coque peuvent également être positionnées au niveau des zones de l'aubage de plus grande épaisseur. En outre, les parties en forme de coque peuvent également présenter une géométrie intéressante d'un point de vue acoustique, par exemple pour réduire les nuisances sonores.

Comme illustré sur la figure 4, une matière élastomère 5 peut être coulée ou injectée à l'intérieur de l'enveloppe 20 et de part et d'autre de la structure de renfort 22. L'intégration d'une matière élastomère à l'intérieur de la structure de renfort permettra d'amortir certaines sollicitations lorsque le noyau sera présent à l'intérieur de l'aube en matériau composite à fabriquer. Ainsi, la matière élastomère 5 intégrée au noyau 2 n'est pas destinée à être retirée à la fin du procédé de fabrication de l'aube en matériau composite.

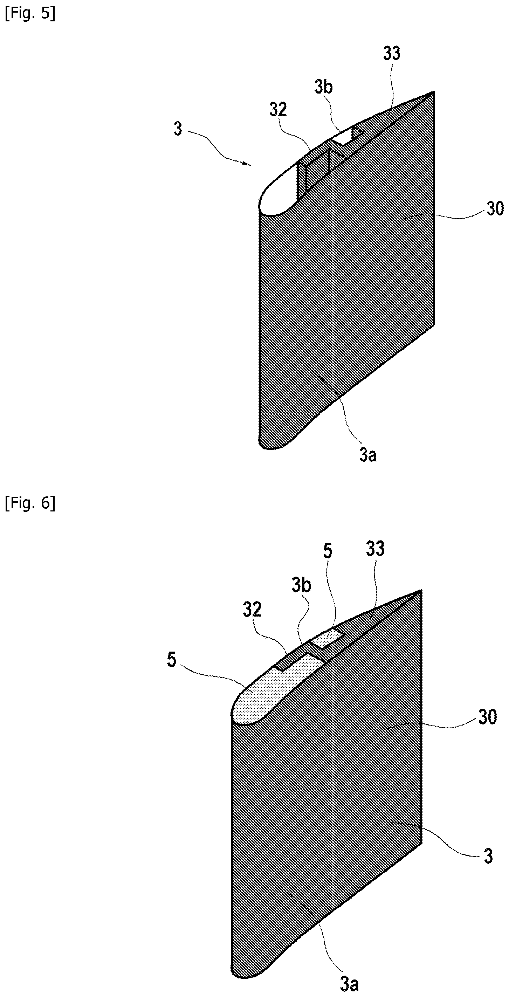

La structure de renfort peut également comporter des corps pleins, qui épouseront la forme d'une partie de la cavité de l'aube. La figure 5 illustre un noyau 3 comprenant une enveloppe 30 et une structure de renfort composée d'une coque 32 et d'un corps plein 33. Le corps plein 33 épouse la forme d'une partie de l'enveloppe 30, de sorte à venir soutenir simultanément les deux surfaces 3a et 3b du noyau 3 destinées à venir en contact des peaux de l'aubage, qui correspondront à l'intrados et à l'extrados de l'aube.

Les corps pleins de la structure de renfort peuvent être placés judicieusement de manière à soutenir ou renforcer des zones particulières de l'aube. Toutefois, si la structure de renfort est en métal, on cherchera à limiter la présence et la taille de corps pleins dans la structure de renfort métallique afin de limiter sa masse.

Comme illustré sur la figure 6, une matière élastomère 5 peut être coulée ou injectée à l'intérieur de l'enveloppe 30 et de part et d'autre de la partie en forme de coque 32. L'intégration d'une matière élastomère à l'intérieur de la structure de renfort permettra d'amortir certaines sollicitations lorsque le noyau sera présent à l'intérieur de l'aube en matériau composite à fabriquer. Ainsi, la matière élastomère 5 intégrée au noyau 3 n'est pas destinée à être retirée à la fin du procédé de fabrication de l'aube en matériau composite.

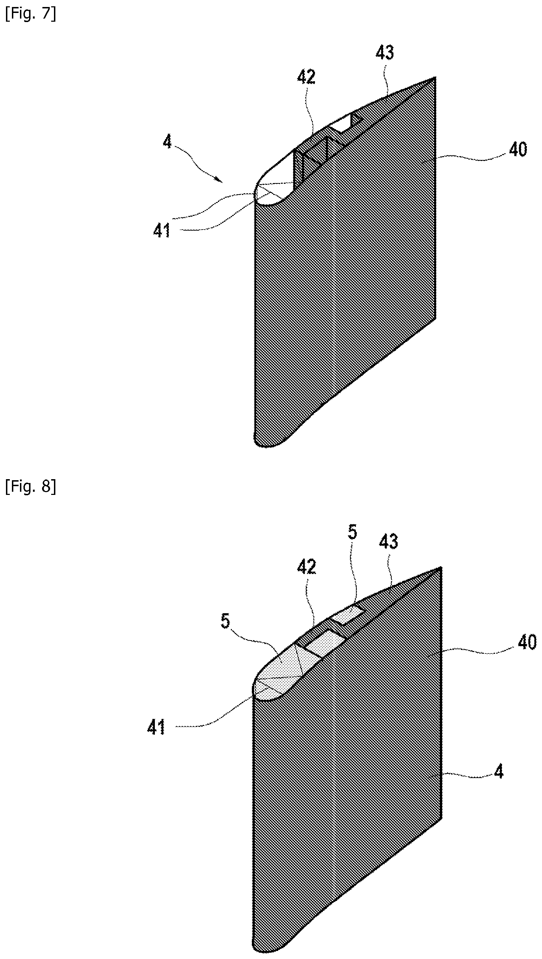

La structure de renfort peut comprendre et combiner des types de renfort différents. Ainsi, comme illustré sur les figures 7 et 8, la structure de renfort peut comporter des parties en treillis, des parties en forme de coque et des corps pleins. La figure 7 illustre un noyau 4 comprenant une enveloppe 40 et une structure de renfort composée d'une partie en forme de treillis 41, d'une partie en forme de coque 42 et d'un corps plein 43. Les parties en treillis peuvent être utilisées de manière privilégiée pour les parties du noyau ayant de grands volumes. Les corps pleins peuvent être utilisés de manière privilégiée dans des parties du noyau ayant des volumes restreints.

Comme illustré sur la figure 8, une matière élastomère 5 peut être coulée ou injectée à l'intérieur de l'enveloppe 40 et entre les éléments 41, 42 et 43 de la structure de renfort. L'intégration d'une matière élastomère à l'intérieur de la structure de renfort permettra d'amortir certaines sollicitations lorsque le noyau sera **présent** à l'intérieur de l'aube en matériau composite à fabriquer. Ainsi, la matière élastomère 5 intégrée au noyau 4 n'est pas destinée à être retirée à la fin du procédé de fabrication de l'aube en matériau composite.

Comme illustré sur les figures 1 et 2, l'enveloppe peut comprendre des protubérances 10a en saillie depuis la surface externe du noyau et dirigées vers l'extérieur. Ces protubérances saillantes 10a ont pour but d'assurer une accroche mécanique entre l'enveloppe et les peaux en matériau composite de l'aube. Ces protubérances saillantes 10a peuvent être disposées de manière particulièrement intéressante de sorte à assurer une accroche mécanique au niveau des peaux de l'aube en matériau composite ayant une cavité. Par exemple, dans le cas d'un aubage, les protubérances saillantes 10a seront principalement situées de sorte à assurer une liaison mécanique entre l'enveloppe et l'intrados et l'extrados de l'aubage.

Dans l'exemple présenté sur les figures 1 et 2, les protubérances saillantes sont orientées perpendiculairement à la surface du noyau. Si le noyau est destiné à être inséré dans une préforme fibreuse, par une déliaison par exemple, de telles protubérances saillantes peuvent gêner l'insertion du noyau en s'accrochant dans les fibres de la préforme avant la mise en place finale du noyau. Ainsi, selon un mode particulier de réalisation de l'invention, si le noyau est inséré d'abord par une première surface, les protubérances saillantes seront dirigées de manière opposée à ladite surface. Par conséquent, le noyau pourra être inséré par ladite surface sans que les protubérances ne « s'agrippent » aux fibres. Lorsque le noyau est correctement mis en position dans la préforme fibreuse, les protubérances saillantes permettent une accroche mécanique, en particulier dans la direction opposée à la direction d'insertion du noyau.

Les structures en treillis permettent aisément le passage d'éléments fonctionnels tels que des câbles, des tuyaux, des conduits ou des fils, à l'intérieur et au travers de la structure de renfort interne de l'aube. En revanche, il peut être nécessaire de réaliser des alésages à l'intérieur des structures en forme de coque ou des corps pleins pour permettent le passage de ces éléments fonctionnels de l'aube.

Nous allons maintenant décrire la fabrication d'un noyau comprenant une enveloppe et une structure de renfort selon l'invention.

Selon un premier mode de réalisation du noyau de l'invention, on réalise la structure de renfort et l'enveloppe séparément, puis on les assemble.

La structure de renfort peut être réalisée en métal. Un métal à faible coefficient de dilatation thermique sera privilégié pour la fabrication de la structure de renfort afin de limiter les contraintes à l'intérieur de l'aube en matériau composite. Le métal de la structure de renfort peut par exemple être du titane, de l'inconel ou de l'acier inoxydable.

La structure de renfort métallique peut être réalisée par fabrication additive métallique. La structure de renfort métallique peut également être fabriquée par l'assemblage de plusieurs parties métalliques selon les moyens conventionnels. L'assemblage des différentes parties peut par exemple être réalisé par soudage ou par collage.

La structure de renfort peut également être réalisée en polymère ou en composite. Le polymère pour la fabrication de la structure peut contenir des fibres discontinues ou continues. Les fibres peuvent être en verre, en carbone ou en aramide. La résine peut être thermodurcissable ou thermoplastique. De préférence, la structure de renfort en polymère ou en composite doit pouvoir supporter sans être altérée les températures de traitement des peaux en matériau composite. Ainsi, la structure de renfort peut de préférence supporter des températures allant jusqu'à 180°C sans être altérée.

La structure de renfort composite peut être réalisée par fabrication additive composite. La structure de renfort en matériau composite peut également être fabriquée par l'assemblage de plusieurs parties en matériau composite, par exemple par collage.

L'enveloppe peut être réalisée en métal. Un métal à faible coefficient de dilatation thermique sera privilégié pour la fabrication de l'enveloppe afin de limiter les contraintes à l'intérieur de l'aube en matériau composite. Le métal de l'enveloppe peut par exemple être du titane, de l'inconel ou de l'acier inoxydable.

L'enveloppe peut également être réalisée en polymère ou en composite. Le polymère pour la fabrication de l'enveloppe peut contenir des fibres discontinues ou continues. Les fibres peuvent être en verre, en carbone ou en aramide. La résine peut être thermodurcissable ou thermoplastique. De préférence, l'enveloppe en polymère ou en composite doit pouvoir supporter sans être altérée les températures de traitement des peaux en matériau composite. Ainsi, l'enveloppe peut de préférence supporter des températures allant jusqu'à 180°C sans être altérée.

La structure de renfort composite peut être réalisée par fabrication additive composite.

Le matériau utilisé pour réaliser l'enveloppe peut être le même que celui utilisé pour réaliser la structure de renfort.

L'enveloppe et la structure de renfort sont ensuite assemblées selon les moyens conventionnels, par exemple par soudage ou par collage.

Selon un deuxième mode de réalisation du noyau de l'invention, on réalise d'abord la structure de renfort, puis on réalise l'enveloppe directement autour de la structure de renfort.

La structure de renfort peut être réalisée en métal, en matériau composite ou en polymère selon les moyens décrits précédemment.

De même, l'enveloppe peut être réalisée en métal, en matériau composite ou en polymère selon les moyens décrits précédemment.

L'enveloppe est par exemple réalisée en moulant deux moitiés destinées à être assemblées pour former l'enveloppe. Les deux moitiés sont ensuite disposées autour de la structure de renfort puis assemblées à la structure de renfort et entre elles pour former le noyau.

Selon un troisième mode de réalisation du noyau de l'invention, la structure de renfort et l'enveloppe sont réalisées d'une seule pièce. Par exemple, la structure de renfort et l'enveloppe sont réalisées par fabrication additive d'un ou de plusieurs matériaux. Des matériaux différents peuvent être utilisés pour fabriquer l'enveloppe et la structure de renfort, ou pour fabriquer les différents éléments de la structure de renfort.

La structure de renfort et l'enveloppe peuvent également être réalisés en métal, en polymère ou en matériau composite. La structure de renfort et l'enveloppe peuvent être réalisées dans le même matériau.

Une fois la structure de renfort et l'enveloppe réalisés, une matière élastomère peut être coulée ou injectée à l'intérieur de l'enveloppe, comme décrit précédemment.

Lorsque le noyau ayant la forme de la cavité interne de l'aube en matériau composite a été réalisé, il est utilisé pour fabriquer ladite aube en matériau composite.

Dans les trois modes de réalisation du noyau de l'invention présentés ci-dessous, il est important que la surface du noyau, et donc de l'enveloppe, soit étanche. En effet, lors du procédé de fabrication de l'aube en matériau composite ayant une cavité interne, un fluage de la résine vers l'intérieur du noyau augmenterait la masse de l'aube en remplissant la cavité interne avec une matière non souhaitée. En outre, le fluage de la résine vers l'intérieur du noyau pourrait entraîner la formation de porosités ou de zones sèches dans le matériau composite extérieur.

Une opération de finition peut être réalisée sur le noyau fabriqué comme décrit précédemment, pour améliorer l'état de surface ou l'étanchéité du noyau. Cette opération de finition est particulièrement intéressante pour les noyaux réalisés par impression 3D. Cette opération de finition peut être un recuit, une opération mécanique ou un traitement chimique, comprenant éventuellement l'ajout d'un film de résine puis une cuisson.

Nous allons maintenir décrire différents modes de réalisation d'une aube comprenant une cavité renforcée selon le procédé de l'invention.

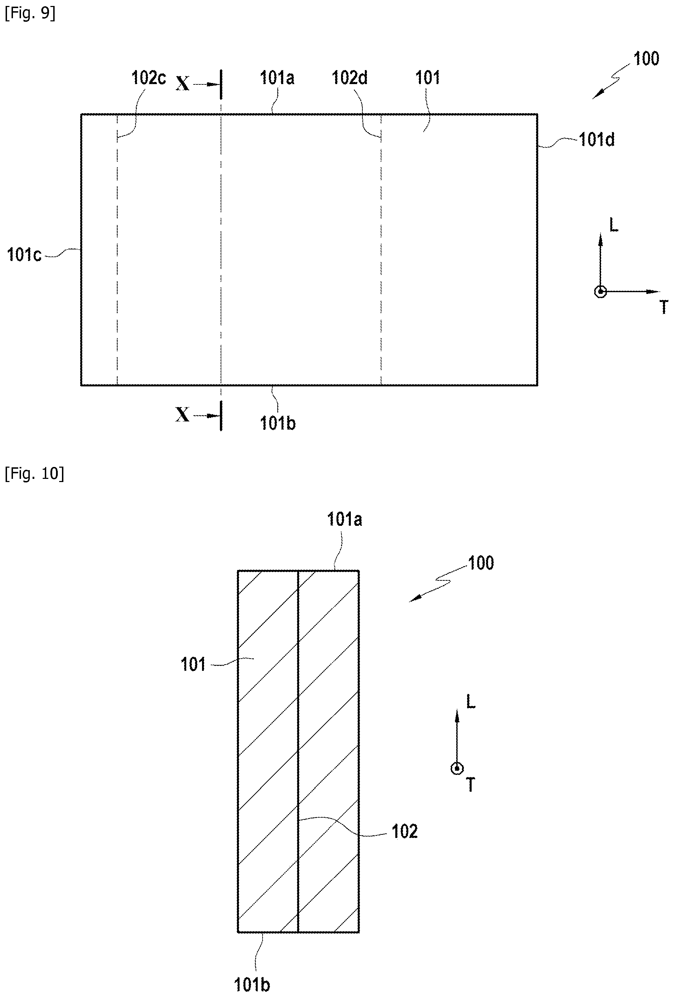

Selon un premier mode de réalisation du procédé de l'invention présenté sur les figures 9 à 11, on réalise une ébauche fibreuse 100 destinée à envelopper le noyau. Cette ébauche fibreuse permettra la formation d'une peau en matériau composite autour du noyau, c'est-à-dire la formation d'une peau en matériau composite autour de l'enveloppe étanche du noyau.

L'ébauche 100 est obtenue à partir d'une bande 101 tissée par tissage tridimensionnel (3D) ou multicouches, la bande 101 s'étendant de façon générale dans une direction L correspondant à la direction longitudinale de l'aube à fabriquer. Le tissage est réalisé par exemple avec des fils de chaîne s'étendant dans la direction L.

Une déliaison 102 est formée sensiblement au milieu de la bande 101, sur au moins une partie de la longueur de l'ébauche fibreuse 100 entre les bords longitudinaux 101c et 101d, entre des limites 102c et 102d. De préférence, la déliaison 102 doit s'étendre au moins jusqu'à l'un des bords transversaux 101a et 101b. Dans l'exemple illustré sur les figures 9 et 10, la déliaison s'étend sur toute la longueur de l'ébauche fibreuse 100, entre les bords transversaux 101a et 101b. Cette déliaison 102 permet de former une cavité interne dans l'ébauche fibreuse 100, destinée à permettre le passage du noyau précédemment réalisé.

L'ébauche fibreuse peut être réalisée par tissage 3D avec armure interlock comprenant la déliaison. Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure. De façon bien connue, la déliaison est ménagée entre deux couches de fils de chaîne en omettant de faire passer un fil de trame à travers la zone de déliaison pour lier des fils de couches de chaîne situées de part et d'autre de la déliaison.

L'ébauche fibreuse 100 comprend une pluralité de couches de fils de chaîne qui sont liées par tissage 3D sauf au niveau de la déliaison 102. Hors la déliaison 102, les couches de fils de chaîne de l'ébauche 100 sont toutes liées entre elles.

On peut utiliser pour le tissage des fils en céramique, notamment des fils à base de carbure de silicium (SiC), par exemple ceux fournis sous la dénomination « Nicalon » par la société japonaise Nippon Carbon. D'autres fils en céramique sont utilisables notamment des fils en oxyde réfractaire, tels que des fils à base d'alumine Al₂O₃, en particulier pour des matériaux CMC de type oxyde/oxyde (fibre du renfort fibreuxet et matrice en oxyde réfractaire). De préférence, on utilisera pour le tissage des fils de carbone, par exemple pour un matériau CMC à renfort fibreux en carbone.

La bande fibreuse peut être traitée pour éliminer l'ensimage présent sur les fibres et la présence d'oxyde à la surface des fibres comme connu en soi.

Egalement connu en soi, une mince couche de revêtement d'interphase de défragilisation peut être ensuite formée sur les fibres de la bande filtreuse par infiltration chimique en phase gazeuse, ou CVI (« Chemical Vapour Inflitration »). Le matériau d'interphase est par exemple du carbone pyrolytique PyC, du nitrure de bore BN ou du carbone dopé au bore BC. L'épaisseur de la couche formée est pas exemple comprise entre 10 nanomètres et 100 nanomètres pour conserver une capacité de déformation des ébauches fibreuses.

La bande fibreuse est ensuite imprégnée par une composition de consolidation, typiquement une résine précurseur de carbone ou une résine précurseur de céramique éventuellement diluée dans un solvant. La consolidation peut être réalisée en étuve.

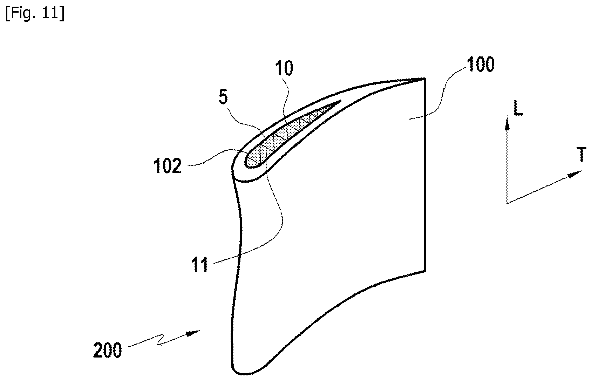

Selon ce premier mode de réalisation de l'invention, le noyau est introduit dans l'ébauche fibreuse 100 par la déliaison 102 de sorte à former une préforme fibreuse 200 comme illustré sur la figure 11. Si le noyau possède des protubérances saillantes à sa surface externe, ces dernières s'insèrent entre les fils de l'ébauche fibreuse.

On procède ensuite à la densification de la préforme fibreuse 200 en comblant la porosité de la préforme, dans tout ou partie du volume de celle-ci, par le matériau constitutif de la matrice. La matrice du matériau composite de la pièce à fabriquer peut être obtenue de façon connue en soi suivant le procédé par voie liquide.

Une étape de formage peut être réalisée de préférence après l'insertion du noyau dans la préforme fibreuse. Cette étape de formage permet de réduire le foisonnement de la préforme. Cette étape de formage est de préférence réalisée à chaud, la préforme fibreuse étant mouillée ou sèche.

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme disposée autour du noyau est placée dans un moule pouvant être fermé de manière étanche avec un logement ayant la forme de la pièce finale moulée et pouvant notamment présenter une forme vrillée correspondant à la forme définitive de la pièce à fabriquer. Ensuite, on referme le moule et on injecte le précurseur liquide de matrice (par exemple une résine) dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la structure à profil aérodynamique. La matrice organique peut être notamment obtenue à partir de résines époxydes, telle que la résine époxyde à hautes performances vendue sous la référence PR 520 par la société CYTEC, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

La densification de la préforme fibreuse est préférentiellement réalisée par le procédé bien connu de moulage par transfert dit RTM ("Resin Transfert Moulding"). Conformément au procédé RTM, on place la préforme fibreuse disposée autour du noyau dans un moule présentant la forme extérieure de la pièce souhaitée. Le noyau peut jouer le rôle de contre-moule. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. De préférence, le choix de la classe de température et/ou la nature chimique de la résine est déterminé en fonction des sollicitations thermomécaniques auxquelles doit être soumise l'aube. Une fois la résine injectée dans tout le renfort, on procède à sa polymérisation par traitement thermique conformément au procédé RTM.

On obtient ainsi une aube en matériau composite ayant une cavité interne renforcée par une structure de renfort et une enveloppe. Si l'enveloppe comprend des protubérances saillantes, ces dernières sont insérées entre les fils du matériau composite afin de créer une accroche mécanique entre la structure de renfort et la partie de l'aube en matériau composite fabriquée par le procédé RTM. La cavité interne de l'aube en matériau composite peut être remplie entièrement ou partiellement par une matière élastomère pour ses propriétés amortissantes.

Selon un deuxième mode de réalisation du procédé de l'invention (variante non illustrée), on réalise l'aube en matériau composite ayant une cavité interne de manière bien connue par drapage. Ainsi, on applique des couches fibreuses sur le noyau précédemment réalisé, c'est-à-dire qu'on applique des couches fibreuses sur l'enveloppe étanche du noyau. Les couches fibreuses peuvent être pré-imprégnées de résine précurseur de matrice, ou peuvent être des strates sèches qui seront densifiées par une résine après drapage. Les couches fibreuses peuvent être des tissus unidimensionnels, bidimensionnels ou tridimensionnels, sous réserve d'avoir une épaisseur permettant le drapage. Les couches fibreuses peuvent également présenter des nappes de fibres longues discontinues, à répartition maîtrisée ou aléatoire.

La ou les résines d'imprégnation des couches sont réticulées par un même traitement thermique réalisé sur l'ensemble des couches fibreuses. On obtient ainsi une enveloppe en matériau composite autour du noyau.

L'aube en matériau composite peut également être obtenue de manière bien connue par thermocompression de stratification de plis.

On obtient ainsi une aube en matériau composite ayant une cavité interne renforcée par une structure de renfort et une enveloppe. Si l'enveloppe comprend des protubérances saillantes, ces dernières sont insérées entre les fils du matériau composite afin de créer une accroche mécanique entre la structure de renfort et les peaux en matériau composite de l'aube. La cavité interne de l'aube en matériau composite peut être remplie entièrement ou partiellement par une matière élastomère pour ses propriétés amortissantes.

## Revendications

1. Procédé de fabrication d'une aube de turbomachine en matériau composite ayant une cavité, comprenant au moins :
- la réalisation d'un noyau (1 ; 2 ; 3 ; 4) ayant la forme de la cavité de l'aube à fabriquer, ledit noyau comprenant une structure de renfort (11 ; 22 ; 32, 33 ; 41, 42, 43) occupant seulement une partie du volume du noyau, la structure de renfort (11 ; 41) présentant au moins en partie une architecture en treillis, le noyau comprenant en outre une enveloppe étanche (10 ; 20 ; 30 ; 40) définissant la surface extérieure dudit noyau, et
- la formation d'une peau en matériau composite autour du noyau (1 ; 2 ; 3 ; 4).

2. Procédé de fabrication selon la revendication 1, dans lequel le volume restant du noyau (1 ; 2 ; 3 ; 4) comprend un matériau élastomère (5), de manière à obtenir une aube en matériau composite ayant une cavité occupée par le matériau élastomère (5) et la structure de renfort (11 ; 22 ; 32, 33 ; 41, 42, 43).

3. Procédé de fabrication selon la revendication 1 ou 2, dans lequel la structure de renfort comprend au moins un élément de soutien (22 ; 32, 33 ; 42, 43) joignant deux parois interne de l'enveloppe en regard l'une de l'autre.

4. Procédé de fabrication selon la revendication 3, dans lequel l'élément de soutien (22 ; 32, 33 ; 42, 43) est positionné sur un ou plusieurs ventres des modes propres de vibration des parois de la cavité.

5. Procédé de fabrication selon la revendication 3 ou 4, dans lequel l'élément de soutien (33 ; 43) est un corps plein épousant la forme interne d'une partie de l'enveloppe (30 ; 40).

6. Procédé de fabrication selon l'une quelconque des revendications 1 à 5, dans lequel l'enveloppe (10) comprend des protubérances (10a) en saillie vers l'extérieur du noyau (1).

7. Procédé de fabrication selon l'une quelconque des revendications 1 à 6, dans lequel la peau en matériau composite est réalisée par l'injection d'une résine précurseur de matrice dans une préforme fibreuse recouvrant le noyau, le procédé comprenant en outre le traitement de ladite résine pour obtenir une peau comprenant un renfort fibreux densifié par ladite matrice.

8. Procédé de fabrication selon la revendication 7, dans lequel la préforme fibreuse est réalisée par insertion du noyau dans une déliaison d'une ébauche fibreuse réalisée en une seule pièce par tissage tridimensionnel de fils.

9. Procédé de fabrication selon la revendication 7, dans lequel la préforme fibreuse est obtenue par drapage de strates fibreuses autour du noyau.

10. Procédé de fabrication selon l'une quelconque des revendications 1 à 6, dans lequel la peau en matériau composite est réalisée par drapage de strates fibreuses pré-imprégnées d'une résine précurseur de matrice autour du noyau, le procédé comprenant en outre le traitement de ladite résine pour obtenir une peau comprenant un renfort fibreux densifié par ladite matrice.

## Patentansprüche

1. Verfahren zur Herstellung einer Schaufel aus Verbundmaterial, die einen Hohlraum aufweist, für eine Turbomaschine, umfassend zumindest:
- die Verwirklichung eines Kerns (1; 2; 3; 4), der die Form des Hohlraums der Schaufel aufweist, die hergestellt werden soll, wobei der Kern eine Verstärkungsstruktur (11; 22; 32, 33; 41, 42, 43) umfasst, die nur einen Teil des Volumens des Kerns beansprucht, wobei die Verstärkungsstruktur (11; 41) zumindest zum Teil eine Gitterarchitektur aufweist, wobei der Kern ferner eine dichte Hülle (10; 20; 30; 40) umfasst, welche die äußere Oberfläche des Kerns definiert, und
- die Bildung einer Haut aus Verbundmaterial um den Kern (1; 2; 3; 4) herum.

2. Herstellungsverfahren nach Anspruch 1, wobei das verbleibende Volumen des Kerns (1; 2; 3; 4) ein Elastomermaterial (5) umfasst, um eine Schaufel aus Verbundmaterial zu erhalten, die einen Hohlraum aufweist, der von dem Elastomermaterial (5) und der Verstärkungsstruktur (11; 22; 32, 33; 41, 42, 43) beansprucht wird.

3. Herstellungsverfahren nach Anspruch 1 oder 2, wobei die Verstärkungsstruktur zumindest ein Stützelement (22; 32, 33; 42, 43) umfasst, das zwei Innenwände der Hülle, die einander zugewandt sind, vereinigt.

4. Herstellungsverfahren nach Anspruch 3, wobei das Stützelement (22; 32, 33; 42, 43) auf einer oder mehreren Bauchzonen der Eigenschwingungsmoden der Wände des Hohlraums positioniert wird.

5. Herstellungsverfahren nach Anspruch 3 oder 4, wobei das Stützelement (33; 43) ein voller Körper ist, der an die Innenform eines Teils der Hülle (30; 40) angepasst ist.

6. Herstellungsverfahren nach einem der Ansprüche 1 bis 5, wobei die Hülle (10) Vorsprünge (10a) aufweist, die von dem Kern (1) nach außen wegragen.

7. Herstellungsverfahren nach einem der Ansprüche 1 bis 6, wobei die Haut aus Verbundmaterial durch Einspritzen eines Harzvorläufers der Matrix in eine den Faservorform hergestellt wird, die den Kern bedeckt, wobei das Verfahren ferner die Behandlung des Harzes umfasst, um eine Haut zu erhalten, die eine durch die Matrix verdichtete Faserverstärkung umfasst.

8. Herstellungsverfahren nach Anspruch 7, wobei die Faservorform durch Einsetzen des Kerns in eine Entbindung eines Faserrohlings verwirklicht wird, der in einem Stück durch dreidimensionale Verwebung von Fäden hergestellt wird.

9. Herstellungsverfahren nach Anspruch 7, wobei die Faservorform durch Drapierung von Faserschichten um den Kern herum erhalten wird.

10. Herstellungsverfahren nach einem der Ansprüche 1 bis 6, wobei die Haut aus Verbundmaterial durch Drapierung von Faserschichten, die mit einem Harzvorläufer der Matrix vorimprägniert sind, um den Kern herum verwirklicht wird, wobei das Verfahren ferner die Behandlung des Harzes umfasst, um eine Haut zu erhalten, die eine durch die Matrix verdichtete Faserverstärkung umfasst.

## Claims

1. A method for manufacturing a turbomachine vane made of composite material and having a cavity, the method comprising at least:
- producing a core (1; 2; 3; 4) having the shape of the cavity of the vane to be manufactured, said core comprising a reinforcing structure (11; 22; 32; 33; 41; 42; 43) occupying only a portion of the volume of the core, the reinforcing structure (11; 41) having, at least in part, a lattice structure, the core further comprising a sealed envelope (10; 20; 30; 40) defining the outer surface of said core; and
- forming a composite material skin around the core (1; 2; 3; 4).

2. The manufacturing method according to claim 1, wherein the volume of the remainder of the core (1; 2; 3; 4) comprises an elastomer material (5), so as to obtain a composite material vane having a cavity occupied by the elastomer material (5) and the reinforcing structure (11; 22; 32, 33; 41, 42, 43).

3. The manufacturing method according to claim 1 or 2, wherein the reinforcing structure comprises at least one support element (22; 32, 33; 42, 43) joining two opposing inner walls of the envelope.

4. The manufacturing method according to claim 3, wherein the support element (22; 32, 33; 42, 43) is positioned at one or more anti-nodes of the natural modes of vibration of the walls of the cavity.

5. The manufacturing method according to claim 3 or 4, wherein the support element (33; 43) is a solid body matching the internal shape of a portion of the envelope (30; 40).

6. The manufacturing method according to any one of claims 1 to 5, wherein the envelope (10) comprises protuberances (10a) projecting towards the outside of the core (1).

7. The manufacturing method according to any one of claims 1 to 6, wherein the composite material skin is produced by injecting a matrix precursor resin into a fibrous preform covering the core, the method further comprising the treatment of said resin in order to obtain a skin comprising a fibrous reinforcement densified by said matrix.

8. The manufacturing method according to claim 7, wherein the fibrous preform is produced by inserting the core into a separating area of a fibrous blank produced in a single piece by three-dimensional weaving of yarns.

9. The manufacturing method according to claim 7, wherein the fibrous preform is obtained by layup of fibrous strata around the core.

10. The manufacturing method according to any one of claims 1 to 6, wherein the composite material skin is produced by layup of fibrous strata preimpregnated with a matrix precursor resin around the core, the method further comprising the treatment of said resin in order to obtain a skin comprising a fibrous reinforcement densified by said matrix.
